# EUROPEAN PATENT APPLICATION

(11) **EP 4 787 836 A1**
(43) Date of publication of application: **05.08.2026**
(21) Application number: 24870739.0
(22) Date of filing: 25.09.2024
(51) Int. Cl.: H04N 19/105, H04N 19/157

(54) **IMAGE BLOCK PREDICTION METHOD AND APPARATUS, AND ELECTRONIC DEVICE**

(30) Priority: 28.09.2023 CN 202311275755
(71) Applicant: Vivo Mobile Communication Co., Ltd., Dongguan, Guangdong 523863 (CN)
(72) Inventor: ZHOU, Chuan, Dongguan, Guangdong 523863 (CN); LV, Zhuoyi, Dongguan, Guangdong 523863 (CN)
(74) Representative: dompatent
(86) International application number: PCT/CN2024/120908
(87) International publication number: WO 2025/067195

(57) **Abstract**

The present application belongs to the technical field of coding and decoding, and discloses an image block prediction method and apparatus, and an electronic device. The method in embodiments of the present application comprises: obtaining a first reference line corresponding to a first prediction mode in at least two intra-frame prediction modes corresponding to a target image block; on the basis of the first prediction mode and at least one second prediction mode, determining a second reference line corresponding to the second prediction mode, the second prediction mode being a prediction mode among the at least two intra-frame prediction modes excluding the first prediction mode; and fusing a first prediction block and at least one second prediction block, and determining a target prediction block corresponding to the target image block, the first prediction block being determined on the basis of the first prediction mode and the first reference line, and each second prediction block being determined on the basis of a second prediction mode and a second reference line.

## Description

### CROSS-REFERENCE TO RELATED APPLICATIONS

This application claims priority to Chinese Patent Application No. 202311275755.8, filed in China on September 28, 2023, which is incorporated herein by reference in its entirety.

### TECHNICAL FIELD

This application belongs to the field of encoding and decoding technologies, and specifically relates to an image block prediction method and apparatus, and an electronic device.

### BACKGROUND

Intra prediction has many prediction modes to process a variety of types of textures in an image, including a direct current (Direct Current, DC) mode, a planar (planar) mode, and some angular prediction modes. A row of reconstructed pixels above a current block and a column of reconstructed pixels on the left of the current block are used as reference pixels, and a prediction value for the current prediction block is obtained by using a specified prediction mode, so that a purpose of removing spatial redundancy is achieved. There are 65 angular prediction modes in versatile video coding (Versatile Video Coding, VVC), and each angular prediction mode is equivalent to an offset in a horizontal or vertical direction.

A plurality of prediction modes or a plurality of reference lines are used to perform intra prediction to obtain a plurality of prediction blocks, and the plurality of prediction blocks are fused by using a weighted averaging or nonlinear fitting method to obtain a final prediction block.

However, in a current multi-intra-prediction-mode fusion technology, a specific intra prediction mode is used to determine a position of a reference line corresponding to the intra prediction mode (for example, an Nth intra prediction mode is used to determine a position of an Nth reference line corresponding to the Nth intra prediction mode). This manner has a problem of inaccurate prediction.

### SUMMARY

Embodiments of this application provide an image block prediction method and apparatus, and an electronic device, so as to improve prediction accuracy in a multi-intra-prediction-mode fusion technology.

According to a first aspect, an image block prediction method is provided. The method includes:
obtaining a first reference line corresponding to a first prediction mode in at least two intra prediction modes corresponding to a target image block;
determining, based on the first prediction mode and at least one second prediction mode, a second reference line corresponding to the second prediction mode, where the second prediction mode is a prediction mode other than the first prediction mode in the at least two intra prediction modes; and
fusing a first prediction block and at least one second prediction block, to determine a target prediction block corresponding to the target image block, where the first prediction block is determined based on the first prediction mode and the first reference line, and each second prediction block is determined based on one second prediction mode and the second reference line.

According to a second aspect, an image block prediction apparatus is provided, including:
an obtaining module, configured to obtain a first reference line corresponding to a first prediction mode in at least two intra prediction modes corresponding to a target image block;
a first determining module, configured to determine, based on the first prediction mode and at least one second prediction mode, a second reference line corresponding to the second prediction mode, where the second prediction mode is a prediction mode other than the first prediction mode in the at least two intra prediction modes; and
a second determining module, configured to fuse a first prediction block and at least one second prediction block, to determine a target prediction block corresponding to the target image block, where the first prediction block is determined based on the first prediction mode and the first reference line, and each second prediction block is determined based on one second prediction mode and the second reference line.

According to a third aspect, an electronic device is provided, including a processor and a memory, the memory stores a program or instructions capable of running on the processor, and the program or the instructions are executed by the processor to implement the steps of the method according to the first aspect.

According to a fourth aspect, an electronic device is provided, including a processor and a communication interface, where the processor is configured to:
obtain a first reference line corresponding to a first prediction mode in at least two intra prediction modes corresponding to a target image block;
determine, based on the first prediction mode and at least one second prediction mode, a second reference line corresponding to the second prediction mode, where the second prediction mode is a prediction mode other than the first prediction mode in the at least two intra prediction modes; and
fuse a first prediction block and at least one second prediction block, to determine a target prediction block corresponding to the target image block, where the first prediction block is determined based on the first prediction mode and the first reference line, and each second prediction block is determined based on one second prediction mode and the second reference line.

According to a fifth aspect, an image block prediction system is provided, including an image block prediction apparatus, where the image block prediction apparatus may be configured to perform the steps of the method according to the first aspect.

According to a sixth aspect, a readable storage medium is provided, where the readable storage medium stores a program or instructions, and the program or the instructions are executed by a processor to implement the steps of the method according to the first aspect.

According to a seventh aspect, a chip is provided, where the chip includes a processor and a communication interface, the communication interface is coupled to the processor, and the processor is configured to run a program or instructions to implement the steps of the method according to the first aspect.

According to an eighth aspect, a computer program/program product is provided, where the computer program/program product is stored in a storage medium, and the computer program/program product is executed by at least one processor to implement the steps of the method according to the first aspect.

In the embodiments of this application, a first reference line corresponding to a first prediction mode in at least two intra prediction modes is first obtained, then, based on the first prediction mode and at least one second prediction mode, a second reference line corresponding to the second prediction mode is determined, and a first prediction block determined based on the first prediction mode and the first reference line and at least one second prediction block determined based on the second prediction mode and the second reference line are fused to obtain a target prediction block corresponding to a target image block. In a related technology, only the second prediction mode is used to determine the second reference line, so that a prediction result is inaccurate. In this implementation of the embodiments of this application, when the reference line corresponding to the second prediction mode is determined, both the second prediction mode and the first prediction mode are used, and by determining the reference line corresponding to the second prediction mode with reference to the first prediction mode, a problem of inaccurate prediction result caused by determining the reference line by only using the second prediction mode can be avoided, so that a prediction block obtained based on the second prediction mode and the second reference line is better, thereby improving prediction accuracy in the multi-intra-prediction-mode fusion technology.

### BRIEF DESCRIPTION OF DRAWINGS

FIG. 1 is a schematic diagram of an encoding and decoding system according to an embodiment of this application;
FIG. 2 is a schematic structural diagram of an encoder according to an embodiment of this application;
FIG. 3 is a schematic structural diagram of a decoder according to an embodiment of this application;
FIG. 4 is a schematic flowchart of an image block prediction method according to an embodiment of this application;
FIG. 5 is a schematic diagram of a module of an image block prediction apparatus according to an embodiment of this application;
FIG. 6 is a schematic structural diagram of an electronic device according to an embodiment of this application; and
FIG. 7 is a schematic structural diagram of a communication device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

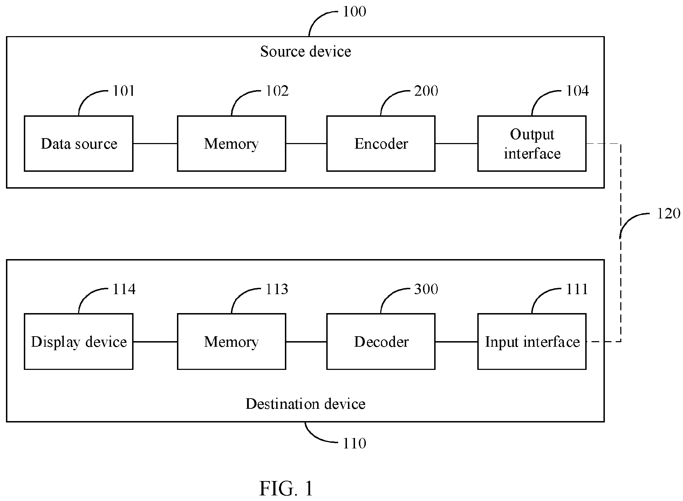

FIG. 1 is a schematic diagram of an encoding and decoding system according to an embodiment of this application. The technical solution of this embodiment of this application relates to encoding and decoding (Coder-Decoder, CODEC) (including encoding or decoding) video data. The video data includes an original unencoded video, an encoded video, a decoded (for example, reconstructed) video, a syntax element, or the like.

As shown in FIG. 1, the encoding and decoding system includes a source device 100, and the source device 100 provides encoded video data decoded and displayed by a destination device 110. Specifically, the source device 100 provides video data to the destination device 110 via a communication medium 120. The source device 100 and the destination device 110 may include any one or more of a desktop computer, a notebook (for example, a laptop) computer, a tablet computer, a set-top box, a mobile phone, a wearable device (e.g., a smartwatch or a wearable camera), a television, a camera, a display device, an in-vehicle device, a virtual reality (virtual reality, VR) device, an augmented reality (Augmented reality, AR) device, a mixed reality (mixed reality, MR) device, a digital media player, a video game console, a video conference device, a video streaming device, a broadcast receiver device, a broadcast transmitter device, a spacecraft, a plane, a robot, a satellite, and the like.

In an example of FIG. 1, the source device 100 includes a data source 101, a memory 102, an encoder 200, and an output interface 104. The destination device 110 includes an input interface 111, a decoder 300, a memory 113, and a display device 114. The source device 100 represents an example of a video encoding device, and the destination device 110 represents an example of a video decoding device. In another example, the source device 100 and the destination device 110 may not include some components in FIG. 1, or may include other components not shown in FIG. 1. For example, the source device 100 may receive video data from an external data source, such as an external camera. Similarly, the destination device 110 may be connected to an external display device via an interface, and does not include an integrated display device. For another example, the memory 102 and the memory 113 may be external memories.

Although FIG. 1 depicts the source device 100 and the destination device 110 as separate devices, in some examples, the source device 100 and the destination device 110 may alternatively be integrated into one device. In such embodiments, a function corresponding to the source device 100 and a function corresponding to the destination device 110 may be implemented by using same hardware or software, or by using separate hardware or software, or any combination thereof.

In some examples, the source device 100 and the destination device 110 may perform unidirectional video transmission or bidirectional video transmission. In a case of bidirectional video transmission, the source device 100 and the destination device 110 may operate in a substantially symmetrical manner, that is, each of the source device 100 and the destination device 110 includes an encoder and a decoder.

The data source 101 represents a source (i.e., original unencoded video data) of the video data and provides continuous pictures including the video data to the encoder 200, and the encoder 200 encodes the data of the pictures. The data source 101 of the source device 100 may include a video collection device (such as a video camera), a video archive including a previously collected original video, or a video feed interface (feed interface) for receiving a video from a video content provider. Alternatively, the data source 101 may generate computer graphics-based data as a source video, or combine a real-time video, an archived video, and a computer-generated video. In these cases, the encoder 200 encodes collected, pre-collected, or computer-generated video data. The encoder 200 may rearrange the pictures from a receiving order (sometimes referred to as "a display order") in an encoding order. The encoder 200 may generate a bitstream including the encoded video data. The source device 100 may then output the encoded video data to the communication medium 120 via the output interface 104 for reception or retrieval by, for example, the input interface 111 of the destination device 110.

The memory 102 of the source device 100 and the memory 113 of the destination device 110 represent general-purpose memories. In some examples, the memory 102 may store original video data from the data source 101, and the memory 113 may store decoded video data from the decoder 300. Additionally or alternatively, the memories 102 and 113 may store software instructions that can be executed by, for example, the encoder 200 and the decoder 300, respectively. Although the memory 102 and the memory 113 are shown separately from the encoder 200 and the decoder 300 in this example, it should be understood that the encoder 200 and the decoder 300 may further include internal memories for functionally similar or equivalent purposes. If the encoder 200 and the decoder 300 are deployed on a same hardware device, the memory 102 and the memory 113 may be a same memory. In addition, the memories 102 and 113 may store, for example, encoded video data output from the encoder 200 and input to the decoder 300. In some examples, portions of the memories 102 and 113 may be assigned to one or more video buffers, for example, for storing original, decoded or encoded video data.

In some examples, the source device 100 may output encoded data from the output interface 104 to the memory 113. Similarly, the destination device 110 may access the encoded data from the memory 113 via the input interface 111. The memory 113 or the memory 102 may include any one of various distributed or locally accessed data storage media, such as a hard drive, a Blu-ray disc, a digital versatile disc (Digital Versatile Disc, DVD), a compact disc read-only memory (Compact Disc Read-Only Memory, CD-ROM), a flash memory, a volatile or non-volatile memory, or any other suitable digital storage medium for storing encoded video data.

The output interface 104 may include any type of medium or device capable of sending encoded video data from the source device 100 to the destination device 110. For example, the output interface 104 may include a transmitter or transceiver, such as an antenna, configured to send encoded video data directly in real time from the source device 100 to the destination device 110. The encoded video data may be modulated according to a communication standard of a wireless communication protocol and sent to the destination device 110.

The communication medium 120 may include an instantaneous medium, such as wireless broadcast or wired network transmission. For example, the communication medium 120 may include a radio frequency (radio frequency, RF) spectrum or one or more physical transmission lines (for example, cables). The communication medium 120 may form a part of a packet-based network (such as a local area network, a wide area network, or a global network such as the Internet). The communication medium 120 may alternatively be in a form of a storage medium (for example, a non-temporary storage medium), such as a hard disk, a flash drive, a compact disc, a digital video disc, a Blu-ray disc, a volatile or non-volatile memory, or any other suitable digital storage medium for storing encoded video data.

In some implementations, the communication medium 120 may include a router, a switch, a base station, or any other device that may be configured to facilitate communication from the source device 100 to the destination device 110. For example, a server (not shown) may receive the encoded video from the source device 100 and provide the encoded video data to the destination device 110, for example, provide the encoded video data to the destination device 110 via network transmission. The server may include a web server (for example, for a website), a server configured to provide a file transfer protocol service (such as a file transfer protocol (File Transfer Protocol, FTP) or a file delivery over unidirectional transport (File Delivery Over Unidirectional Transport, FLUTE) protocol), a content delivery network (content delivery network, CDN) device, a hypertext transfer protocol (Hypertext Transfer Protocol, HTTP) server, a multimedia broadcast multicast service (Multimedia Broadcast Multicast Services, MBMS) or evolved multimedia broadcast multicast service (evolved Multimedia Broadcast Multicast Service, eMBMS) server, or a network-attached storage (Network-attached storage, NAS) device. The server may implement one or more HTTP streaming transport protocols, such as an MPEG media transport (MPEG Media Transport, MMT) protocol, a dynamic adaptive streaming over HTTP (Dynamic Adaptive Streaming over HTTP, DASH) protocol, an HTTP live streaming (HTTP Live Streaming, HLS) protocol, or a real time streaming protocol (Real Time Streaming Protocol, RTSP).

The destination device 110 may access the encoded video data from the server, for example, via a wireless channel (for example, a Wi-Fi connection) or a wired connection (for example, a digital subscriber line (Digital subscriber line, DSL), and a cable modem) for accessing encoded video data stored on the server.

The output interface 104 and the input interface 111 may represent wireless transmitters/receivers, modems, wired networking components (for example, Ethernet network cards), wireless communication components operated according to IEEE 802.11 or IEEE 802.15 standards (for example, ZigBeeTM, Bluetooth standards, or the like), or other physical components. In an example in which the output interface 104 and the input interface 111 include a wireless component, the output interface 104 and the input interface 111 may be configured to transfer data, such as encoded video data, according to WIFI, Ethernet, cellular networks (such as 4G, long term evolution (LTE), advanced LTE, 5G, or 6G).

The technology provided in this embodiment of this application may be applied to video encoding and decoding supporting one or more of the following multimedia applications: video conferencing, over-the-air television broadcast, cable television transmission, satellite television transmission, Internet streaming video transmission, a digital video encoded on a data storage medium, decoding of a digital video stored on a data storage medium, or another application.

The input interface 111 of the destination device 110 receives the encoded video bitstream (bitstream) from the communication medium 120. The encoded video bitstream may include a syntax element and an encoded data unit (for example, a sequence, a picture group, a picture, a slice, a block, or the like), where the syntax element is used to decode the encoded data unit to obtain decoded video data. The display device 114 displays the decoded video data to a user. The display device 114 may include a cathode ray tube (Cathode ray tube, CRT), a liquid-crystal display (liquid-crystal display, LCD), a plasma display, an organic light-emitting diode (organic light-emitting diode, OLED) display, or another type of display device.

The encoder 200 and the decoder 300 may be implemented as one or more of various processing circuits, and the processing circuit may include a microprocessor, a digital signal processor (Digital Signal Processors, DSP), an application specific integrated circuit (Application Specific Integrated Circuit, ASIC), a field programmable gate array (Field Programmable Gate Arrays, FPGA), discrete logic, hardware, or any combination thereof. When the technology is implemented in software in whole or in part, the device may store the instruction used in the software in an appropriate non-transient computer readable storage medium, and use one or more processors to execute the instruction in hardware to execute the technology provided in the embodiments of this application.

The encoder 200 and the decoder 300 may process the following video encoding and decoding standards: H.263, H.264, H.265 (also referred to as high efficiency video coding (High Efficiency Video Coding, HEVC)), H.266 (also referred to as versatile video coding (Versatile Video Coding, VVC)), moving picture experts group 2 (Moving Picture Experts Group 2, MPEG-2), MPEG-4, VP8, VP9, alliance for open media video 1 (Alliance for Open Media Video 1, AV1), audio video coding standard 1 (Audio Video coding Standard 1, AVS1), AVS2, AVS3, or a next-generation video standard protocol. This is not specifically limited in this embodiment of this application.

Generally, the encoder 200 and the decoder 300 may perform block-based encoding and decoding of pictures. The term "block" generally refers to a structure that includes data to be processed (for example, encoded, decoded, or used in another manner during encoding or decoding). For example, a block may include a two-dimensional matrix of samples of luma or chroma data. For example, the encoder 200 and the decoder 300 may encode and decode video data represented in a YUV format.

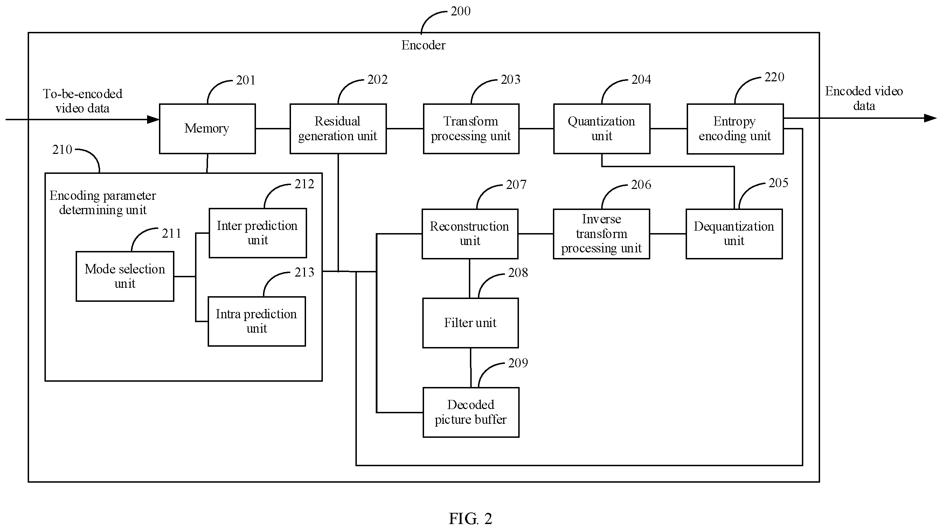

Referring to FIG. 2, FIG. 2 is a schematic structural diagram of an encoder 200 according to an embodiment of this application. The encoder 200 may be the encoder 200 in FIG. 1. In an example of FIG. 2, the encoder 200 includes a memory 201, an encoding parameter determining unit 210, a residual generation unit 202, a transform processing unit 203, a quantization unit 204, a dequantization unit 205, an inverse transform processing unit 206, a reconstruction unit 207, a filter unit 208, a decoded picture buffer (decoded picture buffer, DPB) 209, and an entropy encoding unit 220.

The memory 201 may store to-be-encoded video data. For example, the encoder 200 may receive and store video data from the data source 101 shown in FIG. 1. In some examples, the memory 201 may be on a same chip as another component of the encoder 200 (as shown in FIG. 2), or may be independent of a chip on which the components are located.

The encoding parameter determining unit 210 includes a mode selection unit 211, an inter prediction unit 212, and an intra prediction unit 213. The inter prediction unit 212 is configured to obtain a first prediction block of a current block by using an inter prediction mode, the intra prediction unit 213 is configured to obtain a second prediction block of the current block by using an intra prediction mode, and the mode selection unit 211 is configured to obtain a target prediction block based on the first prediction block and the second prediction block, and determine a final prediction mode. In addition, the encoding parameter determining unit 210 may further include another functional unit, for example, a functional unit configured to determine a partitioning manner of a coding unit (coding unit, CU), a functional unit configured to determine a transform type of residual data of the CU, or a quantization parameter of residual data of the CU.

For ease of description and understanding, in this embodiment of this application, a to-be-processed CU in a current image is referred to as a current CU, and a to-be-processed image block in the current CU is referred to as a current block or a to-be-processed image block, for example, in encoding, it refers to a block currently being encoded, and in decoding, it refers to a block currently being decoded.

The inter prediction unit 212 may include a motion estimation unit and a motion compensation unit. For inter prediction of the current block, the motion estimation unit may perform motion search to identify one or more matching reference blocks in one or more reference pictures (for example, one or more previously encoded and decoded pictures stored in the DPB 209).

The motion estimation unit may form one or more motion vectors (motion vector, MV) indicating a position of a reference block in the reference picture relative to a position of the current block in a current picture. The motion compensation unit may obtain, by means of interpolation, a prediction value of precision indicated by a motion vector.

The encoding parameter determining unit 210 may provide the target prediction block to the residual generation unit 202. The residual generation unit 202 receives the original unencoded video data of the current block from the memory 201, and calculates a residual between the current block and the target prediction block to obtain a residual block. In some examples, a function of the residual generation unit 202 may be implemented by using one or more subtractor circuits that perform binary subtraction.

As an example, the encoding parameter determining unit 210 may provide a syntax element representing an encoding parameter to the entropy encoding unit 220 for encoding. The encoding parameter includes one or more of the partitioning manner of the CU, the final prediction mode, the transform type of the residual data of the CU, the quantization parameter of the residual data of the CU, or the like.

The transform processing unit 203 performs transform on the residual block output by the residual generation unit 202 to obtain a transform coefficient block, where the transform may include discrete cosine transform (Discrete Cosine Transform, DCT), integer transform, directional transform, Karhunen-Loeve transform, or the like. In some examples, the encoder 200 may not include the transform processing unit 203.

The quantization unit 204 may quantize a transform coefficient in the transform coefficient block based on a quantization parameter (quantization parameter, QP) value associated with the current block to generate a quantized transform coefficient block.

The dequantization unit 205 and the inverse transform processing unit 206 may respectively perform dequantization and inverse transform on the transform coefficient block to obtain a reconstructed residual block. The reconstruction unit 207 may generate a reconstructed block corresponding to the current block based on the reconstructed residual block and the target prediction block generated by the encoding parameter determining unit 210.

The filter unit 208 may perform one or more filter operations on the reconstructed block. For example, the filter unit 208 may be a deblocking filter (deblocking filter, DBF), an adaptive loop filter (adaptive loop filter, ALF), a sample adaptive offset (sample adaptive offset, SAO) filter, or the like. In some examples, the encoder 200 may not include the filter unit 208.

The encoder 200 stores a reconstructed picture obtained from the reconstructed block in the DPB 209. For example, in an example in which an operation of the filter unit 208 is not needed, the reconstruction unit 207 may store the reconstructed block to the DPB 209. In an example in which an operation of the filter unit 208 is needed, the filter unit 208 may store a filtered reconstructed block to the DPB 209. The inter prediction unit 212 obtains the reconstructed picture from the DPB 209, so as to perform inter prediction on a block of a subsequent to-be-encoded picture. In some examples, the DPB 209 may be replaced with another type of memory.

The entropy encoding unit 220 may perform entropy encoding on a syntax element of another component in the encoder 200 to output encoded video data. For example, the entropy encoding unit 220 may perform entropy encoding on the quantized transform coefficient block from the quantization unit 204. As another example, the entropy encoding unit 220 may perform entropy encoding on a syntax element (for example, motion information for inter prediction or intra mode information for intra prediction) from the encoding parameter determining unit 210.

It may be understood that the composition of the encoder 200 in FIG. 2 is merely illustrative, and does not constitute a limitation on this embodiment of this application.

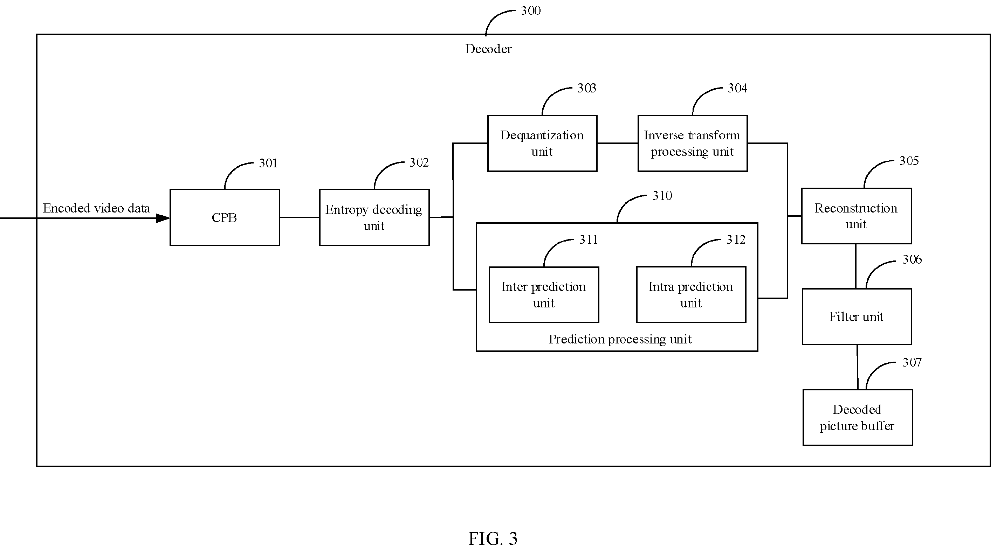

FIG. 3 is a schematic structural diagram of a decoder 300 according to an embodiment of this application. The decoder 300 may be the decoder 300 described in FIG. 1. In an example of FIG. 3, the decoder 300 includes a coded picture buffer (coded picture buffer, CPB) 301, an entropy decoding unit 302, a prediction processing unit 310, a dequantization unit 303, an inverse transform processing unit 304, a reconstruction unit 305, a filter unit 306, and a DPB 307.

The entropy decoding unit 302 may receive encoded video data from the CPB 301 and perform entropy decoding on the video data to obtain a syntax element, where the syntax element indicates an encoding parameter, and the encoding parameter includes one or more of a partitioning manner of a CU, a final prediction mode, a transform type of residual data of the CU, or a quantization parameter of residual data of the CU.

In a case that the syntax element includes the final prediction mode, the prediction processing unit 310 obtains the final prediction mode. If the final prediction mode is an inter prediction mode, a prediction block of a current CU may be obtained by using an inter prediction unit 311 of the prediction processing unit 310. If the final prediction mode is an intra prediction mode, the prediction block of the current CU may be obtained by using an intra prediction unit 312 of the prediction processing unit 310. In some examples, the prediction processing unit 310 may further include a unit configured to perform a prediction function based on another prediction mode.

The CPB 301 may obtain the encoded video data from the communication medium 120 shown in FIG. 1 and store the encoded video data. The DPB 307 is configured to store a decoded picture. Optionally, the CPB 301 and the DPB 307 may alternatively be replaced with another type of memory, which is not specifically limited in this application. In some examples, the CPB 301 may be on a same chip as other components of the decoder 300 (as shown in the figure), or may be independent of the chip on which the components are located.

The decoder 300 may separately perform a reconstruction operation on each block. The entropy decoding unit 302 may perform entropy decoding on a syntax element of a quantized transform coefficient and transform information (for example, a QP or a transform mode indication) to obtain the quantized transform coefficient. The dequantization unit 303 performs dequantization on the quantized transform coefficient to obtain a transform coefficient block that includes the transform coefficient. The inverse transform processing unit 304 performs inverse transform on the transform coefficient block to generate a residual block corresponding to the current block, where the inverse transform is a reverse operation of the foregoing transform.

The reconstruction unit 305 may reconstruct the current block based on the prediction block and the residual block. For example, the reconstruction unit 305 may add a sample of the residual block to a corresponding sample of the prediction block to reconstruct the current block.

The filter unit 306 may perform one or more filter operations on the reconstructed block. For example, for a type of the filter unit 306, reference may be made to a type of the filter unit 208, and details are not described herein again. In some examples, an operation of the filter unit 306 may be skipped.

The decoder 300 may store a reconstructed picture obtained from the reconstructed block in the DPB 307. For example, in an example in which the operation of the filter unit 306 is not performed, the reconstruction unit 305 may store the reconstructed block to the DPB 307. In an example in which the operation of the filter unit 306 is performed, the filter unit 306 may store a filtered reconstructed block to the DPB 307. The decoder 300 may output the decoded picture (for example, a decoded video) from the DPB 307 for subsequent presentation on a display device, such as the display device 114 in FIG. 1.

The following describes, with reference to the accompanying drawings, an image block prediction method and apparatus according to an embodiment of this application, and an electronic device. The image block prediction method provided in this embodiment of this application may be performed by an encoder side, for example, the encoder 200 shown in FIG. 1 or FIG. 2. The image block prediction method provided in this embodiment of this application may be performed by a decoder side, for example, the decoder 300 shown in FIG. 1 or FIG. 3. The encoder side and the decoder side may be implemented by software, hardware, or a combination thereof. When the encoder side and the decoder side are implemented by hardware, the encoder side may be referred to as an encoder device or a video encoding device, and the decoder side may be referred to as a decoder device or a video decoding device.

The following first describes the technologies related to embodiments of this application.

In video encoding, a frame of image is divided into many macroblocks, and a prediction block is obtained by using intra prediction or inter prediction. A difference between an original block and the prediction block is a residual block, and then transform, quantization, and entropy encoding are performed on the residual block.

Image types in a video standard generally include I images, P images, and B images. An I image can be decoded independently without reference to another image. A P image uses a plurality of (past) images preceding a current image in a display order as reference images, and a B image can use a plurality of (past) images preceding the current image in the display order and a plurality of (future) images following the current image in the display order as reference images.

### 1. Template-based intra mode derivation (Template-based intra mode derivation, TIMD)

TIMD is also a technology for implicitly deriving an intra prediction mode. At the decoder side, if a TIMD mode is true, for each candidate mode in a most probable mode (most probable mode, MPM) list, a reference pixel of a template is used to generate a prediction pixel of the template. The template described herein is composed of decoded reconstructed pixels adjacent to a current to-be-decoded encoded block, and the reconstructed pixels may include one row/several rows above the encoded block and one column/several columns on the left of the encoded block. A cost is calculated as a sum of absolute transformed differences (absolute transformed differences, SATD) between a prediction sample and a reconstruction sample of the template. One or more intra prediction modes with a minimum cost are selected as an intra prediction mode for prediction.

### 2. Multiple reference lines

In pre-search for a next-generation compression standard, for an intra prediction mode, a method for weighting an intra prediction obtained from a reference line is proposed to derive an intra prediction. An expression is *p_{fusion}* = *w*₀*pₗᵢₙₑ* + *w*₁*p*_{*line*+1}, where *pₗᵢₙₑ* is an intra prediction from a default reference line, and *p*_{*line*+1} is a prediction from a line above the default reference line. Weights are set to *w*₀ = 3/4 and *w*₁ = 1/4.

When there is only one intra prediction mode, *pₗᵢₙₑ* and *p*_{*line*+1} are prediction blocks obtained by using the same intra prediction mode.

Currently, there are two intra prediction modes in a TIMD fusion mode. An expression is *P* = *Xp*₁ + *Yp*₂, and *p*₁ is a prediction block obtained by using the 1st intra prediction mode and a first reference line (line). *p*₂ is a prediction block obtained by using the 2nd intra prediction mode and a second reference line (line or line+1, which may be written as a reference line that is the same as or different from the first reference line). Which reference line (line or line+1) is selected as the second reference line is inferred from the second prediction mode.

### 3. Wide-angle intra prediction mode

A conventional angle intra prediction direction is defined from 45 degrees to -135 degrees in a counterclockwise direction. In VVC, for a non-square block, several conventional angle intra prediction modes are adaptively replaced with a wide-angle intra prediction mode. The replaced mode performs signal transmission by using an original mode index, and is re-mapped to an index of the wide-angle mode after parsing. A total quantity of intra prediction modes remains unchanged, that is, 67, and an intra mode coding method also remains unchanged.

### 4. Intra sub-partition (Intra Sub-Partitions, ISP) mode

An ISP mode is to divide a luma intra prediction block vertically or horizontally into two or four sub-partitions, specifically depending on a size of the block.

In a multi-intra-prediction-mode fusion technology, it is inaccurate to determine a position of an Nth reference line only based on an Nth intra prediction mode.

With reference to the accompanying drawings, an image block prediction method and apparatus, and an electronic device provided in the embodiments of this application are described in detail below by using some embodiments and application scenarios thereof.

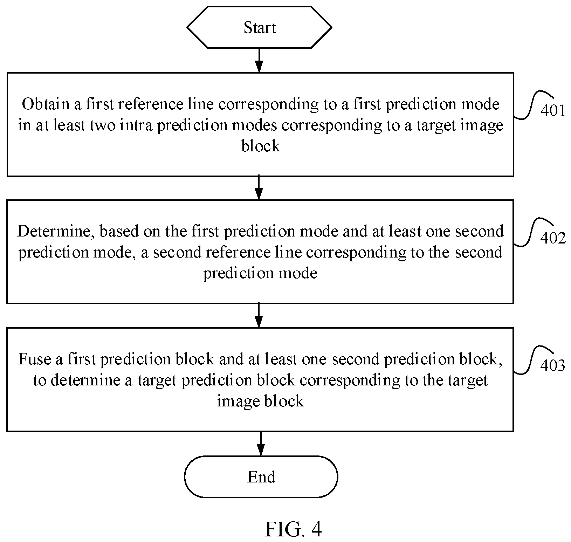

As shown in FIG. 4, an embodiment of this application provides an image block prediction method, including the following steps.

Step 401: Obtain a first reference line corresponding to a first prediction mode in at least two intra prediction modes corresponding to a target image block.

It should be noted that the image block prediction method in this embodiment of this application may be applicable to either an encoding device (an encoder) or a decoding device (a decoder). In a case that the image block prediction method is applied to an encoding device, optionally, the encoding device may determine a cost corresponding to each intra prediction mode based on the at least two intra prediction modes, and then select an intra prediction mode with a minimum cost as the first prediction mode. In a case that the image block prediction method is applied to a decoding device, because the encoding device encodes the first prediction mode into a bitstream, optionally, the decoding device may obtain the first prediction mode based on intra-prediction mode-related information in the bitstream obtained from the encoding device, or optionally, the decoding device may directly decode the bitstream obtained from the encoding device to obtain the first prediction mode.

The first reference line may be preset, for example, may be a 0th line.

It should be noted that the target image block may be understood as a current to-be-processed image block.

Step 402: Determine, based on the first prediction mode and at least one second prediction mode, a second reference line corresponding to the second prediction mode.

Optionally, the second prediction mode is a prediction mode other than the first prediction mode in the at least two intra prediction modes.

Step 403: Fuse a first prediction block and at least one second prediction block, to determine a target prediction block corresponding to the target image block.

The first prediction block is determined based on the first prediction mode and the first reference line, and each second prediction block is determined based on one second prediction mode and the second reference line.

It should be noted herein that each prediction mode corresponds to only one prediction block, that is, in this application, only one first prediction block can be obtained, and if there are several second prediction modes, several second prediction blocks are correspondingly obtained.

It should be noted that a first reference line corresponding to a first prediction mode in at least two intra prediction modes is first obtained, then, based on the first prediction mode and at least one second prediction mode, a second reference line corresponding to the second prediction mode is determined, and a first prediction block determined based on the first prediction mode and the first reference line and at least one second prediction block determined based on the second prediction mode and the second reference line are fused to obtain a target prediction block corresponding to a target image block. In a related technology, only a second mode index corresponding to the second prediction mode is used to determine the second reference line, so that a prediction result is inaccurate. In this implementation of the embodiments of this application, when the reference line corresponding to the second prediction mode is determined, both the second prediction mode and the first prediction mode are used, and by determining the reference line corresponding to the second prediction mode with reference to the first prediction mode, a problem of inaccurate prediction result caused by determining the reference line by only using the second prediction mode can be avoided, so that a prediction block obtained based on the second prediction mode and the second reference line is better, thereby improving prediction accuracy in the multi-intra-prediction-mode fusion technology.

Optionally, the intra prediction mode in this embodiment of this application includes at least one of the following: A DC mode, a PLANAR mode, an angular prediction mode, and a TIMD mode.

Optionally, the angular prediction mode includes a conventional angular prediction mode (corresponding to a case of a square block) and a wide-angle prediction mode (corresponding to a case of a non-square block).

It should be noted that the DC mode, the PLANAR mode, the angular prediction mode, and the TIMD mode may be considered as different types of intra prediction modes. In a same type, there may be a plurality of intra prediction modes (for example, the intra prediction modes are divided into a plurality of modes based on different angles). Therefore, the at least two intra prediction modes mentioned in this embodiment of this application may be a combination of prediction modes in different types, or may be a combination of different prediction modes in a same type. Certainly, the at least two intra prediction modes may alternatively be a combination of prediction modes in different types and different prediction modes in a same type.

Optionally, in an implementation, the second reference line corresponding to the second prediction mode includes at least one of the following:

A1. All second prediction modes other than the first prediction mode in the at least two intra prediction modes correspond to a same second reference line.

In this case, it may be understood that provided that a second reference line of one second prediction mode is determined, second reference lines of all the second prediction modes other than the first prediction mode in the at least two intra prediction modes can be determined. In this manner, a second reference line of each second prediction mode does not need to be determined separately, thereby reducing a processing delay.

A2. Each of all second prediction modes other than the first prediction mode in the at least two intra prediction modes corresponds to an independent second reference line.

In this case, a second reference line needs to be determined separately for each second prediction mode. Second reference lines corresponding to different second prediction modes may be the same or different. In this manner, accuracy of the determined second reference line of each second prediction mode can be improved.

In another optional implementation, the determining, based on the first prediction mode and at least one second prediction mode, a second reference line corresponding to the second prediction mode includes at least one of the following:

A101: Determine, based on the first prediction mode and the at least one second prediction mode, the second reference line corresponding to the second prediction mode in a case that the target image block is not in an intra sub-partition mode.

A102: Determine a second reference line corresponding to the second prediction mode based on the first prediction mode and the at least one second prediction mode in a case that at least one of the first prediction mode and the at least one second prediction mode is an angular prediction mode.

In this case, it may also be understood as follows: In a case that at least one of a first mode index corresponding to the first prediction mode and a second mode index corresponding to the at least one second prediction mode is a mode index corresponding to the angular prediction mode, the second reference line corresponding to the second prediction mode is determined based on the first prediction mode and the at least one second prediction mode.

It should be noted herein that each intra prediction mode corresponds to one mode index. For example, in a wide-angle intra prediction mode, the first mode index and the second mode index in this embodiment of this application refer to an intra prediction mode index obtained after the wide-angle mode is mapped.

It should be noted that the foregoing implementation may include the following several cases:
Case 1: Only in a case that the target image block is not in an intra sub-partition mode, the second reference line corresponding to the second prediction mode is determined based on the first prediction mode and the at least one second prediction mode.
Case 2: Only in a case that at least one of the first prediction mode and the at least one second prediction mode is the angular prediction mode, the second reference line corresponding to the second prediction mode is determined based on the first prediction mode and the at least one second prediction mode.

For example, in a case that the first mode index corresponding to the first prediction mode is a mode index corresponding to the angular prediction mode, the second reference line corresponding to the second prediction mode is determined based on the first prediction mode and the at least one second prediction mode.

For example, in a case that at least one of the second mode index corresponding to the at least one second prediction mode is a mode index corresponding to the angular prediction mode, the second reference line corresponding to the second prediction mode is determined based on the first prediction mode and the at least one second prediction mode.

For example, in a case that both the first mode index corresponding to the first prediction mode and the second mode index corresponding to the at least one second prediction mode are mode indexes corresponding to the angular prediction mode, the second reference line corresponding to the second prediction mode is determined based on the first prediction mode and the at least one second prediction mode.

Case 3: In a case that the target image block is not in an intra sub-partition mode, and at least one of the first mode index corresponding to the first prediction mode and the second mode index corresponding to at least one second prediction mode is a mode index corresponding to the angular prediction mode, the second reference line corresponding to the second prediction mode is determined based on the first prediction mode and the at least one second prediction mode.

In another optional implementation, the determining, based on the first prediction mode and at least one second prediction mode, a second reference line corresponding to the second prediction mode includes at least one of the following:

A11: Determine that a position of the second reference line corresponding to the second prediction mode is different from a position of the first reference line if the second prediction mode does not meet a first condition.

Optionally, the first condition includes at least one of the following:

A111. An absolute value of a difference between the second mode index corresponding to the second prediction mode and the first mode index corresponding to the first prediction mode is greater than or equal to a second preset value.

Optionally, in this case, that when the absolute value of the difference between the second mode index corresponding to the second prediction mode and the first mode index corresponding to the first prediction mode is greater than the second preset value, the first condition is not met means that the absolute value of the difference between the second mode index corresponding to the second prediction mode and the first mode index corresponding to the first prediction mode is less than or equal to the second preset value. Optionally, in this case, that when the absolute value of the difference between the second mode index corresponding to the second prediction mode and the first mode index corresponding to the first prediction mode is greater than or equal to the second preset value, the first condition is not met means that the absolute value of the difference between the second mode index corresponding to the second prediction mode and the first mode index corresponding to the first prediction mode is less than the second preset value.

Optionally, in an implementation, the second preset value is determined based on at least one of the following:
A1111. an area of the target image block;
A1112. a width and a height of the target image block; and
A1113. a ratio of the width to the height of the target image block.

A112. A product of a difference between the second mode index corresponding to the second prediction mode and a target index and a difference between the first mode index corresponding to the first prediction mode and the target index is less than or equal to 0, where the target index includes at least one of the following: a vertical mode index corresponding to the angular prediction mode and a horizontal mode index corresponding to the angular prediction mode.

For example, in this case, the first condition includes at least one of the following:
(predModeIntra1 - VER_IDX) * (predModeIntraK - VER_IDX) is less than or equal to 0; and
(predModeIntra1 - HOR_IDX) * (predModeIntraK - HOR_IDX) is less than or equal to 0, where
predModeIntra1 represents the first mode index, VER_IDX represents the vertical mode index corresponding to the angular prediction mode, predModeIntraK represents the second mode index, and HOR_IDX represents the horizontal mode index corresponding to the angular prediction mode.

It should be noted that, that the product of the difference between the second mode index and the target index and the difference between the first mode index and the target index is less than or equal to 0 includes the following several cases:
Case 1: The product of the difference between the second mode index and the target index and the difference between the first mode index and the target index is less than (corresponding to a data symbol <) 0.
Case 2: The product of the difference between the second mode index and the target index and the difference between the first mode index and the target index is equal to (corresponding to a data symbol =) 0.
Case 3: The product of the difference between the second mode index and the target index and the difference between the first mode index and the target index is less than or equal to (corresponding to a data symbol ≤) 0.

Optionally, in this case, that the first condition is not met means that the product of the difference between the second mode index and the target index and the difference between the first mode index and the target index is greater than 0.

A113. At least one of the second mode index corresponding to the second prediction mode and the first mode index corresponding to the first prediction mode is not equal to a third preset value.

Optionally, in this case, that the first condition is not met means that both the second mode index and the first mode index are equal to the third preset value.

It should be noted that the third preset value refers to a mode index corresponding to the intra prediction mode. Generally, the intra prediction mode corresponds to one or more mode indexes. In a case that the intra prediction mode corresponds to one mode index, provided that at least one of the second mode index and the first mode index is not equal to the third preset value, it indicates that the first condition is met. In a case that the intra prediction mode corresponds to a plurality of mode indexes, the third preset value represents a set of mode indexes. In this case, it may be understood that if at least one of the second mode index and the first mode index is not included in the set of mode indexes, it indicates that the first condition is met.

Optionally, the third preset value may include but is not limited to one or more of the following values:
0, -14, -12, -10, -6, 2, 34, 66, 72, 76, 78, and 80.

For example, if the second prediction mode does not meet A111, A112, or A113, it is determined that the position of the second reference line corresponding to the second prediction mode is different from the position of the first reference line.

For example, if the second prediction mode does not meet two of A111, A112, and A113, it is determined that the position of the second reference line corresponding to the second prediction mode is different from the position of the first reference line.

For example, if the second prediction mode does not meet A111, A112, and A113, it is determined that the position of the second reference line corresponding to the second prediction mode is different from the position of the first reference line.

A12: Determine that the position of the second reference line corresponding to the second prediction mode is different from the position of the first reference line if a quantity of first target modes is greater than or equal to a first preset value.

The first target mode is a second prediction mode, other than the first prediction mode in the at least two intra prediction modes, that does not meet the first condition.

For example, there are M (M is less than or equal to K, where K represents a quantity of the at least two intra prediction modes minus 1) second prediction modes, other than the first prediction mode in the at least two intra prediction modes, that do not meet the first condition. If M is greater than or equal to the first preset value, it is determined that the position of the second reference line corresponding to the second prediction mode is different from the position of the first reference line. It should be specifically noted that when M is equal to K, it indicates that all intra prediction modes other than the first prediction mode in the at least two intra prediction modes do not meet the first condition.

In an optional implementation, the first preset value is set to K/2. Generally, in a case that K/2 is not an integer, an operation of rounding up or down needs to be performed.

In another optional implementation, the determining, based on the first prediction mode and at least one second prediction mode, a second reference line corresponding to the second prediction mode includes at least one of the following:
B11: Determine that the position of the second reference line corresponding to the second prediction mode is the same as the position of the first reference line, or determine the second reference line corresponding to the second prediction mode based on the second prediction mode if the second prediction mode meets the first condition.

In this case, it may be understood that provided that the second prediction mode meets the first condition, the second reference line corresponding to the second prediction mode is set to be the same as the first reference line. Alternatively, provided that the second prediction mode meets the first condition, the second reference line corresponding to the second prediction mode is determined based on the second prediction mode, that is, the second reference line is determined in an existing manner. In this manner, it may be understood that the second reference line corresponding to the second prediction mode is determined based on the second mode index corresponding to the second prediction mode. Optionally, an implementation of determining the second reference line corresponding to the second prediction mode based on the second prediction mode may be as follows: If the target image block is not in an intra sub-partition mode, the second prediction mode is an angular prediction mode, and the second mode index is not equal to 0, -14, -12, -10, -6, 2, 34, 66, 72, 76, 78, or 80, the position of the second reference line is the same as the position of the first reference line; otherwise, the position of the second reference line is different from the position of the first reference line.

For example, if the second prediction mode meets A111, A112, or A113, the position of the second reference line corresponding to the second prediction mode is the same as the position of the first reference line, or the second reference line corresponding to the second prediction mode is determined based on the second prediction mode.

For example, if the second prediction mode meets two of A111, A112, and A113, the position of the second reference line corresponding to the second prediction mode is the same as the position of the first reference line, or the second reference line corresponding to the second prediction mode is determined based on the second prediction mode.

For example, if the second prediction mode meets A111, A112, and A113, the position of the second reference line corresponding to the second prediction mode is the same as the position of the first reference line, or the second reference line corresponding to the second prediction mode is determined based on the second prediction mode.

B12: Determine that the position of the second reference line corresponding to the second prediction mode is the same as the position of the first reference line, or determine the second reference line corresponding to the second prediction mode based on the second prediction mode if the quantity of first target modes is less than the first preset value or a quantity of second target modes is greater than or equal to the first preset value.

The first target mode is a second prediction mode, other than the first prediction mode in the at least two intra prediction modes, that does not meet the first condition, and the second target mode is a second prediction mode, other than the first prediction mode in the at least two intra prediction modes, that meets the first condition.

In this case, it may be understood that provided that a quantity of second prediction modes that do not meet the first condition is less than the first preset value or a quantity of second prediction modes that meet the first condition is greater than or equal to the first preset value, the second reference line corresponding to the second prediction mode is set to be the same as the first reference line. Alternatively, if a quantity of second prediction modes that do not meet the first condition is less than the first preset value or a quantity of second prediction modes that meet the first condition is greater than or equal to the first preset value, the second reference line corresponding to the second prediction mode is determined based on the second prediction mode, that is, the second reference line is determined in an existing manner.

Optionally, in the foregoing case, that the first condition is not met may be understood as the following several cases:
Example 1: When the first condition includes only one of A111, A112, and A113, that the first condition is not met may be understood as that one of A111, A112, and A113 is not met. If one of A111, A112, and A113 is met, it is considered that the first condition is met.
Example 2: When the first condition includes two of A111, A112, and A113, that the first condition is not met may be understood as that two of A111, A112, and A113 are not met. If at least one of two of A111, A112, and A113 is met, it is considered that the first condition is met.
Example 3: When the first condition includes A111, A112, and A113, that the first condition is not met may be understood as that A111, A112, and A113 are not met. If at least one of A111, A112, and A113 is met, it is considered that the first condition is met.

In another optional implementation, the determining, based on the first prediction mode and at least one second prediction mode, a second reference line corresponding to the second prediction mode includes at least one of the following:
C11: Determine that the position of the second reference line corresponding to the second prediction mode is the same as the position of the first reference line, or determine the second reference line corresponding to the second prediction mode based on the second prediction mode in a case that the target image block is in an intra sub-partition mode.

In this case, it may be understood that provided that the target image block is in an intra sub-partition mode, the second reference line corresponding to the second prediction mode is set to be the same as the first reference line. Alternatively, provided that the target image block is in an intra sub-partition mode, the second reference line corresponding to the second prediction mode is determined based on the second prediction mode, that is, the second reference line is determined in an existing manner.

C12: Determine that the position of the second reference line corresponding to the second prediction mode is the same as the position of the first reference line, or determine the second reference line corresponding to the second prediction mode based on the second prediction mode in a case that at least one of the first mode index corresponding to the first prediction mode and the second mode index corresponding to the at least one second prediction mode is not a mode index corresponding to the angular prediction mode.

In this case, it may be understood that provided that at least one of the first mode index corresponding to the first prediction mode and the second mode index corresponding to the at least one second prediction mode is not a mode index corresponding to the angular prediction mode, the second reference line corresponding to the second prediction mode is set to be the same as the first reference line. Alternatively, provided that at least one of the first mode index corresponding to the first prediction mode and the second mode index corresponding to the at least one second prediction mode is not a mode index corresponding to the angular prediction mode, the second reference line corresponding to the second prediction mode is determined based on the second prediction mode, that is, the second reference line is determined in an existing manner.

When C11 and C12 are used in combination, it may be understood that in a case that the target image block is in an intra sub-partition mode and at least one of the first mode index corresponding to the first prediction mode and the second mode index corresponding to the at least one second prediction mode is not a mode index corresponding to the angular prediction mode, it is determined that the position of the second reference line corresponding to the second prediction mode is the same as the position of the first reference line, or the second reference line corresponding to the second prediction mode is determined based on the second prediction mode.

Optionally, that at least one of the first mode index corresponding to the first prediction mode and the second mode index corresponding to the at least one second prediction mode is not a mode index corresponding to the angular prediction mode may include the following several cases:
Case 1: The first mode index corresponding to the first prediction mode is not a mode index corresponding to the angular prediction mode.
Case 2: At least one of the second mode index corresponding to the at least one second prediction mode is not a mode index corresponding to the angular prediction mode.
Case 3: The first mode index corresponding to the first prediction mode and the second mode index corresponding to the at least one second prediction mode are not mode indexes corresponding to the angular prediction mode.

The following describes a specific application of the embodiments of this application by using an example.

Application case 1: The intra prediction mode fusion technology includes only two intra prediction modes.

A specific implementation process includes:
Step S11: Obtain a first prediction mode in the two intra prediction modes corresponding to a target image block and a first reference line corresponding to the first prediction mode.

It should be noted that after the first prediction mode is determined, another prediction mode is a second prediction mode.

Step S12: Determine a second reference line corresponding to the second prediction mode based on the first prediction mode and the second prediction mode.

Optionally, an implementation of this step is as follows:
In a case that the target image block is not in an intra sub-partition mode, and/or at least one of a first mode index corresponding to the first prediction mode or a second mode index corresponding to the second prediction mode is a mode index corresponding to the angular prediction mode, if the second prediction mode does not meet the first condition, it is determined that a position of the second reference line corresponding to the second prediction mode is different from a position of the first reference line.

In a case that the target image block is not in an intra sub-partition mode, and/or at least one of the first mode index corresponding to the first prediction mode or the second mode index corresponding to the second prediction mode is a mode index corresponding to the angular prediction mode, if the second prediction mode meets the first condition, it is determined that the position of the second reference line corresponding to the second prediction mode is the same as the position of the first reference line, or the second reference line corresponding to the second prediction mode is determined based on the second prediction mode.

In a case that the target image block is in an intra sub-partition mode, it is determined that the position of the second reference line corresponding to the second prediction mode is the same as the position of the first reference line, or the second reference line corresponding to the second prediction mode is determined based on the second prediction mode. Alternatively, in a case that at least one of the first mode index corresponding to the first prediction mode and the second mode index corresponding to the second prediction mode is not a mode index corresponding to the angular prediction mode, it is determined that the position of the second reference line corresponding to the second prediction mode is the same as the position of the first reference line, or the second reference line corresponding to the second prediction mode is determined based on the second prediction mode.

Step S13: Fuse a first prediction block determined based on the first prediction mode and the first reference line and a second prediction block determined based on the second prediction mode and the second reference line, to determine and obtain a target prediction block.

Application case 2: The intra prediction mode fusion technology includes three intra prediction modes.

A specific implementation process includes:
Step S21: Obtain a first prediction mode among the three intra prediction modes corresponding to a target image block and a first reference line corresponding to the first prediction mode.

It should be noted that after the first prediction mode is determined, other two prediction modes are second prediction modes.

Step S22: Determine second reference lines corresponding to the two second prediction modes based on the first prediction mode and the second prediction modes.

Optionally, an implementation of this step is as follows:
In a case that the target image block is not in an intra sub-partition mode, and/or at least one of a first mode index corresponding to the first prediction mode or a second mode index corresponding to the second prediction mode is a mode index corresponding to the angular prediction mode, if both the two second prediction modes do not meet the first condition, it is determined that positions of the second reference lines corresponding to the two second prediction modes are different from a position of the first reference line.

In a case that the target image block is not in an intra sub-partition mode, and/or at least one of the first mode index corresponding to the first prediction mode or the second mode index corresponding to the second prediction mode is a mode index corresponding to the angular prediction mode, if at least one of the two second prediction modes meets the first condition, it is determined that the position of the second reference line corresponding to the second prediction mode is the same as the position of the first reference line, or the second reference line corresponding to the second prediction mode is determined based on the second prediction mode.

In a case that the target image block is in an intra sub-partition mode, it is determined that the position of the second reference line corresponding to the second prediction mode is the same as the position of the first reference line, or the second reference line corresponding to the second prediction mode is determined based on the second prediction mode. Alternatively, in a case that at least one of the first mode index corresponding to the first prediction mode and the second mode index corresponding to the second prediction mode is not a mode index corresponding to the angular prediction mode, it is determined that the position of the second reference line corresponding to the second prediction mode is the same as the position of the first reference line, or the second reference line corresponding to the second prediction mode is determined based on the second prediction mode.

Step S23: Fuse a first prediction block determined based on the first prediction mode and the first reference line and two second prediction blocks respectively determined based on the two second prediction modes and the second reference lines, to determine and obtain a target prediction block.

Application case 3: The intra prediction mode fusion technology includes three intra prediction modes.

A specific implementation process includes:
Step S31: Obtain a first prediction mode among the three intra prediction modes corresponding to a target image block and a first reference line corresponding to the first prediction mode.

It should be noted that after the first prediction mode is determined, other two prediction modes are second prediction modes.

Step S32: Determine second reference lines respectively corresponding to the two second prediction modes based on the first prediction mode and the second prediction modes.

Optionally, an implementation of this step is as follows:
In a case that the target image block is not in an intra sub-partition mode, and/or at least one of a first mode index corresponding to the first prediction mode or a second mode index corresponding to the second prediction mode is a mode index corresponding to the angular prediction mode, if a quantity of the two second prediction modes that do not meet the first condition is greater than 1 (or may be understood as that at least one of the two second prediction modes does not meet the first condition), it is determined that a position of the second reference line corresponding to each second prediction mode is different from a position of the first reference line.

In a case that the target image block is not in an intra sub-partition mode, and/or at least one of the first mode index corresponding to the first prediction mode or the second mode index corresponding to the second prediction mode is a mode index corresponding to the angular prediction mode, if both the two second prediction modes meet the first condition, it is determined that the position of the second reference line corresponding to the second prediction mode is the same as the position of the first reference line, or the second reference line corresponding to the second prediction mode is determined based on the second prediction mode.

In a case that the target image block is in an intra sub-partition mode, it is determined that the position of the second reference line corresponding to the second prediction mode is the same as the position of the first reference line, or the second reference line corresponding to the second prediction mode is determined based on the second prediction mode. Alternatively, in a case that at least one of the first mode index corresponding to the first prediction mode and the second mode index corresponding to the second prediction mode is not a mode index corresponding to the angular prediction mode, it is determined that the position of the second reference line corresponding to the second prediction mode is the same as the position of the first reference line, or the second reference line corresponding to the second prediction mode is determined based on the second prediction mode.

Step S33: Fuse a first prediction block determined based on the first prediction mode and the first reference line and two second prediction blocks respectively determined based on the two second prediction modes and the second reference lines, to determine and obtain a target prediction block.

It should be noted that in a related technology, only the second mode index corresponding to the second prediction mode is used to determine the second reference line, so that a prediction result is inaccurate. In this implementation of this embodiment of this application, a difference between the second prediction mode and the first prediction mode may be analyzed by comparing the first mode index corresponding to the first prediction mode and the second mode index corresponding to the at least one second prediction mode. For example, in the first condition, the absolute value of the difference between the second mode index corresponding to the second prediction mode and the first mode index corresponding to the first prediction mode is greater than or equal to the second preset value, which indicates that a difference between the two modes is large, or the product of the difference between the second mode index corresponding to the second prediction mode and the target index and the difference between the first mode index corresponding to the first prediction mode and the target index is less than or equal to 0, which indicates that a difference between the two modes is large, or at least one of the second mode index corresponding to the second prediction mode and the first mode index corresponding to the first prediction mode is not equal to the third preset value, which indicates that a difference between the two modes is large, that is, if the first condition is met, it indicates that a difference between the two modes is large, and if the difference between the two modes is large, a reference line at a position that is the same as that of the first reference line may be used for the second prediction mode. For example, in the first condition, the absolute value of the difference between the second mode index corresponding to the second prediction mode and the first mode index corresponding to the first prediction mode is less than the second preset value, which indicates that a difference between the two modes is small, or the product of the difference between the second mode index corresponding to the second prediction mode and the target index and the difference between the first mode index corresponding to the first prediction mode and the target index is greater than 0, which indicates that a difference between the two modes is small, or both the second mode index corresponding to the second prediction mode and the first mode index corresponding to the first prediction mode are equal to the third preset value, which indicates that a difference between the two modes is small, that is, if the first condition is not met, it indicates that a difference between the two modes is small, and if the difference between the two modes is small, a reference line at a position that is different from that of the first reference line may be used for the second prediction mode, so that a better prediction block may be obtained based on the second prediction mode and the second reference line, thereby improving prediction accuracy in the multi-intra-prediction-mode fusion technology.

The image block prediction method provided in this embodiment of this application may be performed by an image block prediction apparatus. In the embodiments of this application, an example in which the image block prediction apparatus performs the image block prediction method is used to describe the image block prediction apparatus provided in the embodiments of this application.

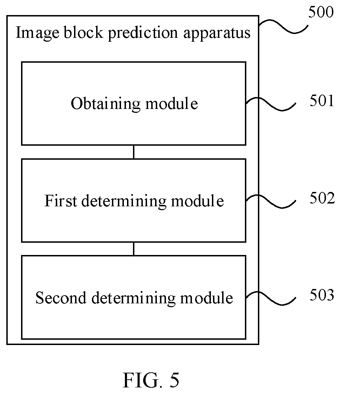

As shown in FIG. 5, an image block prediction apparatus 500 in an embodiment of this application includes:
an obtaining module 501, configured to obtain a first reference line corresponding to a first prediction mode in at least two intra prediction modes corresponding to a target image block;
a first determining module 502, configured to determine, based on the first prediction mode and at least one second prediction mode, a second reference line corresponding to the second prediction mode, where the second prediction mode is a prediction mode other than the first prediction mode in the at least two intra prediction modes; and
a second determining module 503, configured to fuse a first prediction block and at least one second prediction block, to determine a target prediction block corresponding to the target image block, where the first prediction block is determined based on the first prediction mode and the first reference line, and each second prediction block is determined based on one second prediction mode and the second reference line.

Optionally, the first determining module 502 is configured to implement at least one of the following:
determining, based on the first prediction mode and the at least one second prediction mode, the second reference line corresponding to the second prediction mode in a case that the target image block is not in an intra sub-partition mode; and
determining the second reference line corresponding to the second prediction mode based on the first prediction mode and the at least one second prediction mode in a case that at least one of the first prediction mode and the at least one second prediction mode is an angular prediction mode.

Optionally, the first determining module 502 is configured to implement at least one of the following:
determining that a position of the second reference line corresponding to the second prediction mode is different from a position of the first reference line if the second prediction mode does not meet a first condition; and
determining that the position of the second reference line corresponding to the second prediction mode is different from the position of the first reference line if a quantity of first target modes is greater than or equal to a first preset value, where
the first target mode is a second prediction mode, other than the first prediction mode in the at least two intra prediction modes, that does not meet the first condition; and
the first condition includes at least one of the following:
   an absolute value of a difference between a second mode index corresponding to the second prediction mode and a first mode index corresponding to the first prediction mode is greater than or equal to a second preset value;
   a product of a difference between the second mode index corresponding to the second prediction mode and a target index and a difference between the first mode index corresponding to the first prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the first prediction mode is not equal to a third preset value.

Optionally, the first determining module 502 is configured to implement at least one of the following:
determining that a position of the second reference line corresponding to the second prediction mode is the same as a position of the first reference line, or determining the second reference line corresponding to the second prediction mode based on the second prediction mode if the second prediction mode meets a first condition; and
determining that the position of the second reference line corresponding to the second prediction mode is the same as the position of the first reference line, or determining the second reference line corresponding to the second prediction mode based on the second prediction mode if a quantity of first target modes is less than a first preset value or a quantity of second target modes is greater than or equal to the first preset value, where
the first target mode is a second prediction mode, other than the first prediction mode in the at least two intra prediction modes, that does not meet the first condition, and the second target mode is a second prediction mode, other than the first prediction mode in the at least two intra prediction modes, that meets the first condition; and
the first condition includes at least one of the following:
   an absolute value of a difference between a second mode index corresponding to the second prediction mode and a first mode index corresponding to the second prediction mode is greater than or equal to a second preset value;
   a product of a difference between the second mode index corresponding to the second prediction mode and a target index and a difference between the first mode index corresponding to the second prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the second prediction mode is not equal to a third preset value.

Optionally, the second preset value is determined based on at least one of the following:
an area of the target image block;
a width and a height of the target image block; and
a ratio of the width to the height of the target image block.

Optionally, the first determining module is configured to implement at least one of the following:
determining that a position of the second reference line corresponding to the second prediction mode is the same as a position of the first reference line, or determining the second reference line corresponding to the second prediction mode based on the second prediction mode in a case that the target image block is in an intra sub-partition mode; and
determining that the position of the second reference line corresponding to the second prediction mode is the same as the position of the first reference line, or determining the second reference line corresponding to the second prediction mode based on the second prediction mode in a case that at least one of a first mode index corresponding to the first prediction mode and a second mode index corresponding to the at least one second prediction mode is not a mode index corresponding to an angular prediction mode.

Optionally, the second reference line corresponding to the second prediction mode includes at least one of the following:
all second prediction modes other than the first prediction mode in the at least two intra prediction modes correspond to a same second reference line; and
each of all second prediction modes other than the first prediction mode in the at least two intra prediction modes corresponds to an independent second reference line.

Optionally, the intra prediction mode includes at least one of the following: a DC mode, a PLANAR mode, an angular prediction mode, and a template-based intra mode derivation TIMD mode.

It should be noted that the apparatus embodiment corresponds to the foregoing method, all implementations in the foregoing method embodiment are applicable to the apparatus embodiment, and a same technical effect can also be achieved.

The image block prediction apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The image block prediction apparatus provided in this embodiment of this application can implement processes implemented in the method embodiment in FIG. 4, and achieve a same technical effect. To avoid repetition, details are not described herein again.

An embodiment of this application further provides an electronic device, including a processor and a communication interface, where the processor is configured to obtain a first reference line corresponding to a first prediction mode in at least two intra prediction modes corresponding to a target image block;
determine, based on the first prediction mode and at least one second prediction mode, a second reference line corresponding to the second prediction mode, where the second prediction mode is a prediction mode other than the first prediction mode in the at least two intra prediction modes; and
fuse a first prediction block and at least one second prediction block, to determine a target prediction block corresponding to the target image block, where the first prediction block is determined based on the first prediction mode and the first reference line, and each second prediction block is determined based on one second prediction mode and the second reference line.

Optionally, the processor is configured to implement at least one of the following:
determining, based on the first prediction mode and the at least one second prediction mode, the second reference line corresponding to the second prediction mode in a case that the target image block is not in an intra sub-partition mode; and
determining the second reference line corresponding to the second prediction mode based on the first prediction mode and the at least one second prediction mode in a case that at least one of the first prediction mode and the at least one second prediction mode is an angular prediction mode.

Optionally, the processor is configured to implement at least one of the following:
determining that a position of the second reference line corresponding to the second prediction mode is different from a position of the first reference line if the second prediction mode does not meet a first condition; and
determining that the position of the second reference line corresponding to the second prediction mode is different from the position of the first reference line if a quantity of first target modes is greater than or equal to a first preset value, where
the first target mode is a second prediction mode, other than the first prediction mode in the at least two intra prediction modes, that does not meet the first condition; and
the first condition includes at least one of the following:
   an absolute value of a difference between a second mode index corresponding to the second prediction mode and a first mode index corresponding to the first prediction mode is greater than or equal to a second preset value;
   a product of a difference between the second mode index corresponding to the second prediction mode and a target index and a difference between the first mode index corresponding to the first prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the first prediction mode is not equal to a third preset value.

Optionally, the processor is configured to implement at least one of the following:
determining that a position of the second reference line corresponding to the second prediction mode is the same as a position of the first reference line, or determining the second reference line corresponding to the second prediction mode based on the second prediction mode if the second prediction mode meets a first condition; and
determining that the position of the second reference line corresponding to the second prediction mode is the same as the position of the first reference line, or determining the second reference line corresponding to the second prediction mode based on the second prediction mode if a quantity of first target modes is less than a first preset value or a quantity of second target modes is greater than or equal to the first preset value, where
the first target mode is a second prediction mode, other than the first prediction mode in the at least two intra prediction modes, that does not meet the first condition, and the second target mode is a second prediction mode, other than the first prediction mode in the at least two intra prediction modes, that meets the first condition; and
the first condition includes at least one of the following:
   an absolute value of a difference between a second mode index corresponding to the second prediction mode and a first mode index corresponding to the second prediction mode is greater than or equal to a second preset value;
   a product of a difference between the second mode index corresponding to the second prediction mode and a target index and a difference between the first mode index corresponding to the second prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the second prediction mode is not equal to a third preset value.

Optionally, the second preset value is determined based on at least one of the following:
an area of the target image block;
a width and a height of the target image block; and
a ratio of the width to the height of the target image block.

Optionally, the processor is configured to implement at least one of the following:
determining that a position of the second reference line corresponding to the second prediction mode is the same as a position of the first reference line, or determining the second reference line corresponding to the second prediction mode based on the second prediction mode in a case that the target image block is in an intra sub-partition mode; and
determining that the position of the second reference line corresponding to the second prediction mode is the same as the position of the first reference line, or determining the second reference line corresponding to the second prediction mode based on the second prediction mode in a case that at least one of a first mode index corresponding to the first prediction mode and a second mode index corresponding to the at least one second prediction mode is not a mode index corresponding to an angular prediction mode.

Optionally, the second reference line corresponding to the second prediction mode includes at least one of the following:
all second prediction modes other than the first prediction mode in the at least two intra prediction modes correspond to a same second reference line; and
each of all second prediction modes other than the first prediction mode in the at least two intra prediction modes corresponds to an independent second reference line.

Optionally, the intra prediction mode includes at least one of the following: a DC mode, a PLANAR mode, an angular prediction mode, and a template-based intra mode derivation TIMD mode.

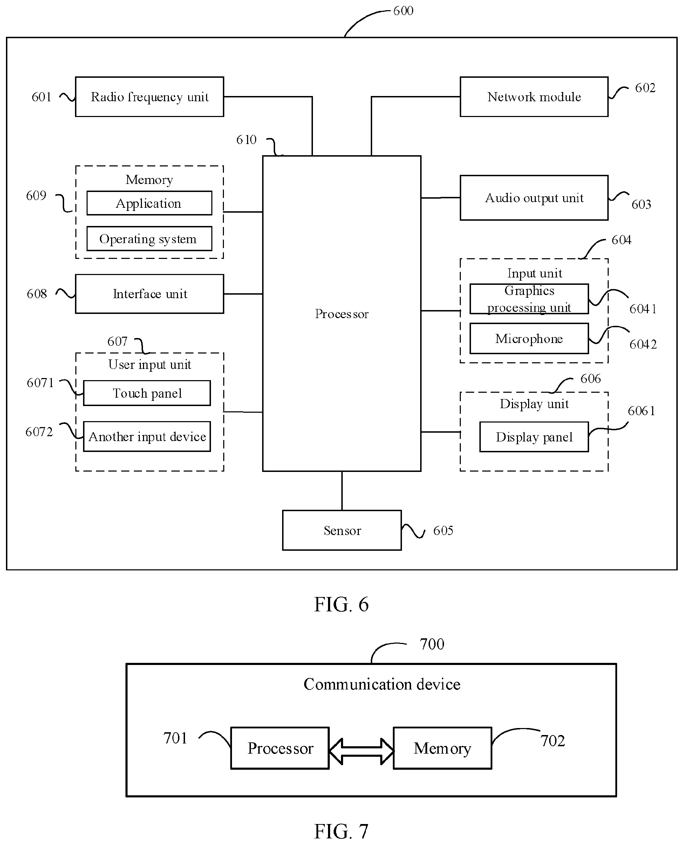

The electronic device embodiment corresponds to the foregoing method embodiment. Each implementation process and implementation of the foregoing method embodiment may be applied to the electronic device embodiment, and a same technical effect can be achieved. Specifically, FIG. 6 is a schematic diagram of a hardware structure of an electronic device for implementing an embodiment of this application.

An electronic device 600 includes but is not limited to at least some components in a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the electronic device 600 may further include a power supply (for example, a battery) that supplies power to each component, and the power supply may be logically connected to the processor 610 by using a power management system, to implement functions such as charging management, discharging management, and power consumption management by using the power management system. The structure of the electronic device shown in FIG. 6 does not constitute a limitation on the electronic device. The electronic device may include more or fewer components than those shown in the figure, or combine some components, or have different component arrangements. Details are not described herein again.

It should be understood that in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a function key (such as a volume control key or an on/off key), a trackball, a mouse, and a joystick. Details are not described herein again.

In the embodiments of this application, after receiving downlink data from an access network device, the radio frequency unit 601 may transmit the downlink data to the processor 610 for processing. In addition, the radio frequency unit 601 may send uplink data to a network side device. Generally, the radio frequency unit 601 includes but is not limited to an antenna, an amplifier, a transceiver, a coupler, a low-noise amplifier, a duplexer, and the like.

The memory 609 may be configured to store a software program or instructions and various types of data. The memory 609 may mainly include a first storage area for storing a program or instructions and a second storage area for storing data. The first storage area may store an operating system, an application or instructions required by at least one function (for example, a sound playback function or an image playback function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 may include one or more processing units. Optionally, the processor 610 integrates an application processor and a modem processor. The application processor mainly processes operations related to an operating system, a user interface, an application, and the like. The modem processor mainly processes a wireless communication signal, such as a baseband processor. It may be understood that the foregoing modem processor may not be integrated into the processor 610.

The processor 610 is further configured to:
obtain a first reference line corresponding to a first prediction mode in at least two intra prediction modes corresponding to a target image block;
determine, based on the first prediction mode and at least one second prediction mode, a second reference line corresponding to the second prediction mode, where the second prediction mode is a prediction mode other than the first prediction mode in the at least two intra prediction modes; and
fuse a first prediction block and at least one second prediction block, to determine a target prediction block corresponding to the target image block, where the first prediction block is determined based on the first prediction mode and the first reference line, and each second prediction block is determined based on one second prediction mode and the second reference line.

Optionally, the processor 610 is configured to implement at least one of the following:
determining, based on the first prediction mode and the at least one second prediction mode, the second reference line corresponding to the second prediction mode in a case that the target image block is not in an intra sub-partition mode; and
determining the second reference line corresponding to the second prediction mode based on the first prediction mode and the at least one second prediction mode in a case that at least one of the first prediction mode and the at least one second prediction mode is an angular prediction mode.

Optionally, the processor 610 is configured to implement at least one of the following:
determining that a position of the second reference line corresponding to the second prediction mode is different from a position of the first reference line if the second prediction mode does not meet a first condition; and
determining that the position of the second reference line corresponding to the second prediction mode is different from the position of the first reference line if a quantity of first target modes is greater than or equal to a first preset value, where
the first target mode is a second prediction mode, other than the first prediction mode in the at least two intra prediction modes, that does not meet the first condition; and
the first condition includes at least one of the following:
   an absolute value of a difference between a second mode index corresponding to the second prediction mode and a first mode index corresponding to the first prediction mode is greater than or equal to a second preset value;
   a product of a difference between the second mode index corresponding to the second prediction mode and a target index and a difference between the first mode index corresponding to the first prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the first prediction mode is not equal to a third preset value.

Optionally, the processor 610 is configured to implement at least one of the following:
determining that a position of the second reference line corresponding to the second prediction mode is the same as a position of the first reference line, or determining the second reference line corresponding to the second prediction mode based on the second prediction mode if the second prediction mode meets a first condition; and
determining that the position of the second reference line corresponding to the second prediction mode is the same as the position of the first reference line, or determining the second reference line corresponding to the second prediction mode based on the second prediction mode if a quantity of first target modes is less than a first preset value or a quantity of second target modes is greater than or equal to the first preset value, where
the first target mode is a second prediction mode, other than the first prediction mode in the at least two intra prediction modes, that does not meet the first condition, and the second target mode is a second prediction mode, other than the first prediction mode in the at least two intra prediction modes, that meets the first condition; and
the first condition includes at least one of the following:
   an absolute value of a difference between a second mode index corresponding to the second prediction mode and a first mode index corresponding to the second prediction mode is greater than or equal to a second preset value;
   a product of a difference between the second mode index corresponding to the second prediction mode and a target index and a difference between the first mode index corresponding to the second prediction mode and the target index is less than or equal to 0, where the target index includes at least one of the following: a vertical mode index corresponding to the angular prediction mode and a horizontal mode index corresponding to the angular prediction mode; and
   at least one of the second mode index corresponding to the second prediction mode and the first mode index corresponding to the second prediction mode is not equal to a third preset value.

Optionally, the second preset value is determined based on at least one of the following:
an area of the target image block;
a width and a height of the target image block; and
a ratio of the width to the height of the target image block.

Optionally, the processor 610 is configured to implement at least one of the following:
determining that a position of the second reference line corresponding to the second prediction mode is the same as a position of the first reference line, or determining the second reference line corresponding to the second prediction mode based on the second prediction mode in a case that the target image block is in an intra sub-partition mode; and
determining that the position of the second reference line corresponding to the second prediction mode is the same as the position of the first reference line, or determining the second reference line corresponding to the second prediction mode based on the second prediction mode in a case that at least one of a first mode index corresponding to the first prediction mode and a second mode index corresponding to the at least one second prediction mode is not a mode index corresponding to an angular prediction mode.

Optionally, the second reference line corresponding to the second prediction mode includes at least one of the following:
all second prediction modes other than the first prediction mode in the at least two intra prediction modes correspond to a same second reference line; and
each of all second prediction modes other than the first prediction mode in the at least two intra prediction modes corresponds to an independent second reference line.

Optionally, the intra prediction mode includes at least one of the following: a DC mode, a PLANAR mode, an angular prediction mode, and a template-based intra mode derivation TIMD mode.

Optionally, an embodiment of this application further provides an electronic device, including a processor, a memory, where a program or instructions is stored in the memory and capable of running on the processor. When the program or the instruction is executed by the processor, processes in the foregoing image block prediction method embodiment are implemented, and a same technical effect can be achieved. To avoid repetition, details are not described herein again.

An embodiment of this application further provides a readable storage medium. The computer-readable storage medium stores a program or instructions. The processes in the foregoing image block prediction method embodiment are implemented when the program or instructions are executed by a processor, and a same technical effect can be achieved. To avoid repetition, details are not described herein again.

The computer-readable storage medium is, for example, a read-only memory (Read-Only Memory, ROM for short), a random access memory (Random Access Memory, RAM for short), a magnetic disk, or an optical disc.

Optionally, as shown in FIG. 7, an embodiment of this application further provides a communication device 700, including a processor 701 and a memory 702. The memory 702 stores a program or instructions capable of running on the processor 701. When being executed by the processor 701, the program or the instructions implement the steps of the foregoing image block prediction method embodiment, and a same technical effect can be achieved.

An embodiment of this application further provides a chip, where the chip includes a processor and a communication interface, the communication interface is coupled to the processor, the processor is configured to run a program or instructions to implement the processes in the foregoing image block prediction method embodiment, and a same technical effect can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing image block prediction method embodiment, and a same technical effect can be achieved. To avoid repetition, details are not described herein again.

An embodiment of this application further provides an image block prediction system, including an image block prediction apparatus, where the image block prediction apparatus may be configured to perform the steps of the foregoing image block prediction method.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and can further include performing functions in a basically simultaneous manner or in a reverse order based on the functions involved. For example, the described method can be performed in an order different from the order described, and various steps may be added, omitted, or combined. In addition, features described with reference to some examples may be combined in other examples.

According to the foregoing descriptions of the implementations, a person skilled in the art can clearly understand that the method in the foregoing embodiments may be implemented by software and a necessary general-purpose hardware platform, or certainly can be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which can be a mobile phone, a computer, a server, an air conditioner, a network device, or the like) to perform the methods described in embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. An image block prediction method, comprising:
obtaining a first reference line corresponding to a first prediction mode in at least two intra prediction modes corresponding to a target image block;
determining, based on the first prediction mode and at least one second prediction mode, a second reference line corresponding to the second prediction mode, wherein the second prediction mode is a prediction mode other than the first prediction mode in the at least two intra prediction modes; and
fusing a first prediction block and at least one second prediction block, to determine a target prediction block corresponding to the target image block, wherein the first prediction block is determined based on the first prediction mode and the first reference line, and each second prediction block is determined based on one second prediction mode and the second reference line.

2. The method according to claim 1, wherein the determining, based on the first prediction mode and at least one second prediction mode, a second reference line corresponding to the second prediction mode comprises at least one of the following:
determining, based on the first prediction mode and the at least one second prediction mode, the second reference line corresponding to the second prediction mode in a case that the target image block is not in an intra sub-partition mode; and
determining the second reference line corresponding to the second prediction mode based on the first prediction mode and the at least one second prediction mode in a case that at least one of the first prediction mode and the at least one second prediction mode is an angular prediction mode.

3. The method according to claim 1 or 2, wherein the determining, based on the first prediction mode and at least one second prediction mode, a second reference line corresponding to the second prediction mode comprises at least one of the following:
determining that a position of the second reference line corresponding to the second prediction mode is different from a position of the first reference line if the second prediction mode does not meet a first condition; and
determining that the position of the second reference line corresponding to the second prediction mode is different from the position of the first reference line if a quantity of first target modes is greater than or equal to a first preset value, wherein
the first target mode is a second prediction mode, other than the first prediction mode in the at least two intra prediction modes, that does not meet the first condition; and
the first condition comprises at least one of the following:
an absolute value of a difference between a second mode index corresponding to the second prediction mode and a first mode index corresponding to the first prediction mode is greater than or equal to a second preset value;
a product of a difference between the second mode index corresponding to the second prediction mode and a target index and a difference between the first mode index corresponding to the first prediction mode and the target index is less than or equal to 0, wherein the target index comprises at least one of the following: a vertical mode index corresponding to an angular prediction mode and a horizontal mode index corresponding to the angular prediction mode; and
at least one of the second mode index corresponding to the second prediction mode and the first mode index corresponding to the first prediction mode is not equal to a third preset value.

4. The method according to claim 1 or 2, wherein the determining, based on the first prediction mode and at least one second prediction mode, a second reference line corresponding to the second prediction mode comprises at least one of the following:
determining that a position of the second reference line corresponding to the second prediction mode is the same as a position of the first reference line, or determining the second reference line corresponding to the second prediction mode based on the second prediction mode if the second prediction mode meets a first condition; and
determining that the position of the second reference line corresponding to the second prediction mode is the same as the position of the first reference line, or determining the second reference line corresponding to the second prediction mode based on the second prediction mode if a quantity of first target modes is less than a first preset value or a quantity of second target modes is greater than or equal to the first preset value, wherein
the first target mode is a second prediction mode, other than the first prediction mode in the at least two intra prediction modes, that does not meet the first condition, and the second target mode is a second prediction mode, other than the first prediction mode in the at least two intra prediction modes, that meets the first condition; and
the first condition comprises at least one of the following:
an absolute value of a difference between a second mode index corresponding to the second prediction mode and a first mode index corresponding to the second prediction mode is greater than or equal to a second preset value;
a product of a difference between the second mode index corresponding to the second prediction mode and a target index and a difference between the first mode index corresponding to the second prediction mode and the target index is less than or equal to 0, wherein the target index comprises at least one of the following: a vertical mode index corresponding to an angular prediction mode and a horizontal mode index corresponding to the angular prediction mode; and
at least one of the second mode index corresponding to the second prediction mode and the first mode index corresponding to the second prediction mode is not equal to a third preset value.

5. The method according to claim 3 or 4, wherein the second preset value is determined based on at least one of the following:
an area of the target image block;
a width and a height of the target image block; and
a ratio of the width to the height of the target image block.

6. The method according to claim 1, wherein the determining, based on the first prediction mode and at least one second prediction mode, a second reference line corresponding to the second prediction mode comprises at least one of the following:
determining that a position of the second reference line corresponding to the second prediction mode is the same as a position of the first reference line, or determining the second reference line corresponding to the second prediction mode based on the second prediction mode in a case that the target image block is in an intra sub-partition mode; and
determining that the position of the second reference line corresponding to the second prediction mode is the same as the position of the first reference line, or determining the second reference line corresponding to the second prediction mode based on the second prediction mode in a case that at least one of a first mode index corresponding to the first prediction mode and a second mode index corresponding to the at least one second prediction mode is not a mode index corresponding to an angular prediction mode.

7. The method according to any one of claims 1 to 3, wherein the second reference line corresponding to the second prediction mode comprises at least one of the following:
all second prediction modes other than the first prediction mode in the at least two intra prediction modes correspond to a same second reference line; and
each of all second prediction modes other than the first prediction mode in the at least two intra prediction modes corresponds to an independent second reference line.

8. The method according to any one of claims 1 to 7, wherein the intra prediction mode comprises at least one of the following: a DC mode, a PLANAR mode, an angular prediction mode, and a template-based intra mode derivation TIMD mode.

9. An image block prediction apparatus, comprising:
an obtaining module, configured to obtain a first reference line corresponding to a first prediction mode in at least two intra prediction modes corresponding to a target image block;
a first determining module, configured to determine, based on the first prediction mode and at least one second prediction mode, a second reference line corresponding to the second prediction mode, wherein the second prediction mode is a prediction mode other than the first prediction mode in the at least two intra prediction modes; and
a second determining module, configured to fuse a first prediction block and at least one second prediction block, to determine a target prediction block corresponding to the target image block, wherein the first prediction block is determined based on the first prediction mode and the first reference line, and each second prediction block is determined based on one second prediction mode and the second reference line.

10. The apparatus according to claim 9, wherein the first determining module is configured to implement at least one of the following:
determining, based on the first prediction mode and the at least one second prediction mode, the second reference line corresponding to the second prediction mode in a case that the target image block is not in an intra sub-partition mode; and
determining the second reference line corresponding to the second prediction mode based on the first prediction mode and the at least one second prediction mode in a case that at least one of the first prediction mode and the at least one second prediction mode is an angular prediction mode.

11. The apparatus according to claim 9 or 10, wherein the first determining module is configured to implement at least one of the following:
determining that a position of the second reference line corresponding to the second prediction mode is different from a position of the first reference line if the second prediction mode does not meet a first condition; and
determining that the position of the second reference line corresponding to the second prediction mode is different from the position of the first reference line if a quantity of first target modes is greater than or equal to a first preset value, wherein
the first target mode is a second prediction mode, other than the first prediction mode in the at least two intra prediction modes, that does not meet the first condition; and
the first condition comprises at least one of the following:
an absolute value of a difference between a second mode index corresponding to the second prediction mode and a first mode index corresponding to the first prediction mode is greater than or equal to a second preset value;
a product of a difference between the second mode index corresponding to the second prediction mode and a target index and a difference between the first mode index corresponding to the first prediction mode and the target index is less than or equal to 0, wherein the target index comprises at least one of the following: a vertical mode index corresponding to an angular prediction mode and a horizontal mode index corresponding to the angular prediction mode; and
at least one of the second mode index corresponding to the second prediction mode and the first mode index corresponding to the first prediction mode is not equal to a third preset value.

12. The apparatus according to claim 9 or 10, wherein the first determining module is configured to implement at least one of the following:
determining that a position of the second reference line corresponding to the second prediction mode is the same as a position of the first reference line, or determining the second reference line corresponding to the second prediction mode based on the second prediction mode if the second prediction mode meets a first condition; and
determining that the position of the second reference line corresponding to the second prediction mode is the same as the position of the first reference line, or determining the second reference line corresponding to the second prediction mode based on the second prediction mode if a quantity of first target modes is less than a first preset value or a quantity of second target modes is greater than or equal to the first preset value, wherein
the first target mode is a second prediction mode, other than the first prediction mode in the at least two intra prediction modes, that does not meet the first condition, and the second target mode is a second prediction mode, other than the first prediction mode in the at least two intra prediction modes, that meets the first condition; and
the first condition comprises at least one of the following:
an absolute value of a difference between a second mode index corresponding to the second prediction mode and a first mode index corresponding to the second prediction mode is greater than or equal to a second preset value;
a product of a difference between the second mode index corresponding to the second prediction mode and a target index and a difference between the first mode index corresponding to the second prediction mode and the target index is less than or equal to 0, wherein the target index comprises at least one of the following: a vertical mode index corresponding to an angular prediction mode and a horizontal mode index corresponding to the angular prediction mode; and
at least one of the second mode index corresponding to the second prediction mode and the first mode index corresponding to the second prediction mode is not equal to a third preset value.

13. The apparatus according to claim 11 or 12, wherein the second preset value is determined based on at least one of the following:
an area of the target image block;
a width and a height of the target image block; and
a ratio of the width to the height of the target image block.

14. The apparatus according to claim 9, wherein the first determining module is configured to implement at least one of the following:
determining that a position of the second reference line corresponding to the second prediction mode is the same as a position of the first reference line, or determining the second reference line corresponding to the second prediction mode based on the second prediction mode in a case that the target image block is in an intra sub-partition mode; and
determining that the position of the second reference line corresponding to the second prediction mode is the same as the position of the first reference line, or determining the second reference line corresponding to the second prediction mode based on the second prediction mode in a case that at least one of a first mode index corresponding to the first prediction mode and a second mode index corresponding to the at least one second prediction mode is not a mode index corresponding to an angular prediction mode.

15. The apparatus according to any one of claims 9 to 11, wherein the second reference line corresponding to the second prediction mode comprises at least one of the following:
all second prediction modes other than the first prediction mode in the at least two intra prediction modes correspond to a same second reference line; and
each of all second prediction modes other than the first prediction mode in the at least two intra prediction modes corresponds to an independent second reference line.

16. The apparatus according to any one of claims 9 to 15, wherein the intra prediction mode comprises at least one of the following: a DC mode, a PLANAR mode, an angular prediction mode, and a template-based intra mode derivation TIMD mode.

17. An electronic device, comprising a processor and a memory, wherein the memory stores a program or instructions capable of running on the processor, and the program or the instructions are executed by the processor to implement the steps of the image block prediction method according to any one of claims 1 to 8.

18. A readable storage medium, wherein the readable storage medium stores a program or instructions, and the program or the instructions are executed by a processor to implement the steps of the image block prediction method according to any one of claims 1 to 8.

19. A chip, wherein the chip comprises a processor and a communication interface, the communication interface is coupled to the processor, and the processor is configured to run a program or instructions to implement the steps of the image block prediction method according to any one of claims 1 to 8.

20. A computer program product, wherein the computer program product is stored in a storage medium, and the computer program product is executed by at least one processor to implement the steps of the image block prediction method according to any one of claims 1 to 8.
